# EUROPÄISCHE PATENTANMELDUNG

(11) **EP 3 581 307 A1**
(43) Veröffentlichungstag der Anmeldung: **18.12.2019**
(21) Anmeldenummer: 19000286.5
(22) Anmeldetag: 12.06.2019
(51) Int. Cl.: B23D 45/00, B23D 45/10, B27B 5/34, B23D 45/04

(54) **TRENNMASCHINE**

(30) Priorität: 12.06.2018 DE 102018004651
(71) Anmelder: Ihle, Gerhard, 75203 Königsbach-Stein (DE)
(72) Erfinder: Ihle, Gerhard, 75203 Königsbach-Stein (DE)
(74) Vertreter: Lichti - Patentanwälte Partnerschaft mbB

(57) **Zusammenfassung**

Eine Trennmaschine zum Abtrennen von Abschnitten vorbestimmter Länge von einem stab- oder trägerförmigen Grundmaterial besitzt eine Trennscheiben-Vorrichtung mit einer zumindest einer drehangetriebenen Trennscheibe. Die Trennscheiben-Vorrichtung kann so verstellt werden, dass das Grundmaterial mittels der Trennscheibe durchtrennt wird. Dabei ist vorgesehen, dass die Trennscheiben-Vorrichtung mehrere auf Abstand parallel nebeneinander angeordnete Trennscheiben umfasst. Die Trennscheiben können auswechselbar auf einer Lagerhülse angebracht sein, wobei die Lagerhülse auf die Antriebswelle aufsetzbar und mit dieser drehfest verbindbar ist.

## Beschreibung

Die Erfindung betrifft eine Trennmaschine zum Abtrennen von Abschnitten vorbestimmter Länge von einem stab- oder trägerförmigen metallenen Grundmaterial, mit einer Trennscheiben-Vorrichtung mit zumindest einer drehangetriebenen Trennscheibe, wobei die Trennscheiben-Vorrichtung so verstellbar ist, dass das Grundmaterial mittels der Trennscheibe durchtrennbar ist.

Bei einer derartigen Trennmaschine handelt es sich um eine Werkzeugmaschine zum Sägen oder Durchtrennen von Bauteilen aus harten metallenen Werkstoffen, wobei die Trennscheibe entweder einen Schneidkranz aus Diamant-Stücken oder Sägezähne aus Hartmetall besitzt. Vorzugsweise wird die Trennmaschine zum Durchtrennen von einem stab- oder trägerförmigen Grundmaterial aus einem Hartmetall verwendet, wovon im Folgenden beispielhaft ausgegangen werden soll.

Um von einem Hartmetallstab Abschnitte vorbestimmter Länge abzutrennen, ist es bekannt, den Hartmetallstab in eine Führung der Trennmaschine einzulegen, ihn dann um ein vorbestimmtes Maß vorzuschieben und zu fixieren und dann eine Trennscheiben-Vorrichtung so abzusenken oder zu schwenken, dass die drehangetriebene Trennscheibe mit dem Hartmetallstab in Anlage kommt und diesen durchschneidet. Anschließend wird die Trennscheiben-Vorrichtung wieder in ihre Ausgangsstellung zurückgestellt und der Hartmetallstab wird nochmals um ein vorbestimmtes Maß vorgeschoben und dann fixiert, woraufhin mittels der Trennscheibe in genannter Weise ein weiterer Abschnitt vorbestimmter Länge abgeschnitten wird.

Das vorgenannte Vorgehen eignet sich, um einige wenige Abschnitte von dem stabförmigen Grundmaterial abzuschneiden, es ist jedoch viel zu langsam, wenn die Herstellung einer Vielzahl von Hartmetallstab-Abschnitten gewünscht ist.

Es wäre möglich, die Arbeitsgeschwindigkeit der Trennmaschine zu erhöhen, d.h. den Vorschub des Hartmetallstabs zu beschleunigen, die Verstellung der Trennscheiben-Vorrichtung zu beschleunigen und die Drehgeschwindigkeit der Trennscheibe zu erhöhen, jedoch leidet darunter wesentlich die Genauigkeit des Schneidvorgangs und die auf diese Weise zu erzielende Zeitersparnis ist relativ gering.

Der Erfindung liegt die Aufgabe zugrunde, eine Trennmaschine der genannten Art zu schaffen, mit der sich eine Vielzahl von Abschnitten vorbestimmter Länge beispielsweise von einem Hartmetallstab mit hoher Genauigkeit abschneiden lassen.

Diese Aufgabe wird erfindungsgemäß durch eine Trennmaschine mit den Merkmalen des Anspruchs 1 gelöst. Dabei ist vorgesehen, dass die Trennscheiben-Vorrichtung mehrere auf Abstand parallel nebeneinander angeordnete Trennscheiben aufweist.

Erfindungsgemäß wird von der Grundüberlegung ausgegangen, mit der Verstellung der Trennscheiben-Vorrichtung nicht nur einen einzelnen Hartmetallstab-Abschnitt abzuschneiden, sondern gleichzeitig von dem Hartmetallstab mehrere Abschnitte gewünschter Länge abzuschneiden. Beispielsweise kann die Trennscheiben-Vorrichtung zwei bis acht Trennscheiben und insbesondere vier bis sechs Trennscheiben umfassen. Wenn die Trennscheiben-Vorrichtung sechs Trennscheiben umfasst, werden gleichzeitig an dem Hartmetallstab sechs Schnitte durchgeführt und somit sechs Hartmetallstab-Abschnitte hergestellt, deren Länge von dem gegenseitigen Abstand zweier benachbarter Trennscheiben bestimmt sind, wobei dieser Abstand vorzugsweise individuell einstellbar und veränderbar ist. Auf diese Weise ist die Arbeitsgeschwindigkeit der Trennmaschine wesentlich erhöht.

In bevorzugter Ausgestaltung der Erfindung ist vorgesehen, dass die Trennscheiben von einer gemeinsamen Antriebswelle angetrieben sind, die mit einer Antriebsvorrichtung, insbesondere einem Elektromotor oder Servomotor verbunden ist. Auf diese Weise ist nicht nur der konstruktive Aufwand gering gehalten, sondern es ist auch sichergestellt, dass die Drehbewegungen der Trennscheiben miteinander synchronisiert sind.

Es kann vorgesehen sein, dass die Trennscheiben direkt auf die Antriebswelle aufgesetzt und insbesondere axial aufgeschoben und dort fixiert werden. In bevorzugter Ausgestaltung der Erfindung ist jedoch vorgesehen, dass eine Lagerhülse zwischengeschaltet ist. Die Trennscheiben können auswechselbar auf der Lagerhülse angebracht und in gewünschter Relativposition fixiert sein. Die Lagerhülse kann auf die Antriebswelle aufgesetzt und insbesondere axial aufgeschoben werden und wird dann mit dieser drehfest verbunden. Dies kann durch eine formschlüssige und/oder kraftschlüssige Verbindung und insbesondere durch Verschrauben oder Verspannen erreicht werden.

Die Lagerhülse besitzt vorzugsweise einen Innendurchmesser, der dem Außendurchmesser der Antriebswelle entspricht, so dass die Lagerhülse spielfrei auf der Antriebswelle sitzt und mit dieser dreht.

Die Lagerhülse kann außerhalb der Trennmaschine mit den Trennscheiben bestückt werden. Dies ist insbesondere vorteilhaft, da außerhalb der Trennmaschine mehr Bauraum zur Verfügung steht, um die Trennscheiben exakt auf der Lagerhülse zu positionieren. Die Lagerhülse mit den daran angebrachten Trennscheiben wird dann in die Trennmaschine eingesetzt und auf die Antriebswelle aufgeschoben und dort fixiert. Dies ist insbesondere bei einem Formatwechsel sinnvoll, d.h. wenn im Folgenden Abschnitte geänderter Länge von dem Hartmetallstab abgeschnitten werden sollen. Der Benutzer kann die Lagerhülse mit den Trennscheiben, deren Abstand auf die neue Länge bzw. das neue Format der Hartmetallstab-Abschnitte ausgerichtet ist, vorbereiten und dann zum Formatwechsel gegen die in der Trennmaschine befindlichen Lagerhülse und die daran angebrachten Trennscheiben austauschen.

Um die Trennscheiben in korrektem gegenseitigem Abstand anzuordnen, hat es sich als vorteilhaft erwiesen, wenn zwischen benachbarten Trennscheiben jeweils ein Distanzstück insbesondere in Form einer Distanzhülse angeordnet ist. Vorzugsweise sind die Distanzstücke auswechselbar auf der Lagerhülse angeordnet, so dass ein Benutzer den gegenseitigen Abstand benachbarter Trennscheiben durch Auswechseln des entsprechenden Distanzstücks in einfacher Weise ändern und anpassen kann.

Der Benutzer kann die Trennscheiben-Vorrichtung, die die Trennscheiben, die Distanzstücke und die Lagerhülse aufweist, in gewünschter Konfiguration außerhalb der Trennmaschine zusammenstellen. Zu diesem Zweck werden die Trennscheiben und die Distanzstücke in abwechselnder Anordnung unter enger Passung auf die Lagerhülse aufgesetzt und dann dort fixiert bzw. festgespannt. Somit ist eine Trennscheiben-Vorrichtung geschaffen, die als Baueinheit von der Antriebswelle abnehmbar und auf diese aufsetzbar bzw. axial aufschiebbar ist.

Während des Schneidvorganges des Hartmetallstabes kann es passieren, dass Metallsplitter oder Späne mit relativ hoher Geschwindigkeit umhergeschleudert werden. Dies bedingt, dass aus Gründen der Arbeitssicherheit ein geschlossenes Gehäuse vorgesehen sein muss, was jedoch dazu führt, dass die innerhalb des Gehäuses angeordneten Baueinheiten der Trennmaschine relativ schwer zugänglich sind. Um den Umbau der Trennscheiben-Vorrichtung bzw. deren Auswechslung zu erleichtern, kann in Weiterbildung der Erfindung vorgesehen sein, dass der Antriebsmotor und die Antriebswelle an einem Lagerblock gehalten und zusammen mit diesem um ein Schwenklager schwenkbar an einem Maschinengestell der Trennmaschine gelagert sind. Um die Trennscheiben-Vorrichtung bzw. die entsprechende Baueinheit auszubauen, wird der Lagerblock mit dem Antriebsmotor und der Antriebswelle und der darauf angeordneten Trennscheiben-Vorrichtung um das Schwenklager in eine derartige Position gebracht, dass der Benutzer in einfacher Weise Zugriff auf die Trennscheiben-Vorrichtung hat und diese von der Antriebswelle abziehen und Trennmaschine entnehmen kann. Entsprechend kann er dann eine neue Trennscheiben-Vorrichtung als Baueinheit auf die Antriebswelle aufsetzen und dann den Antriebsmotor und die Antriebswelle mit der darauf befindlichen neuen Trennscheiben-Vorrichtung wieder in die Betriebsposition innerhalb der Trennmaschine zurückschwenken. Die Antriebswelle ist dabei vorzugsweise an ihrem äußeren, dem Lagerblock und dem Antriebsmotor abgewandten Ende in einem Gegenlager drehbar gelagert, das beispielsweise an einem Maschinengestell angeordnet ist. Das Gegenlager ist vorzugsweise zumindest in axialer Richtung der Antriebswelle verschieblich an dem Maschinengestell gelagert und in verschiedenen Positionen an dem Maschinengestell festlegbar und insbesondere festspannbar. Auf diese Weise ist das Auswechseln der Trennscheiben-Vorrichtung wesentlich vereinfacht.

Vorzugsweise verläuft eine Schwenkachse des Schwenklagers senkrecht zu einer Drehachse der Antriebswelle. In einer möglichen Ausgestaltung der Erfindung kann vorgesehen sein, dass die Drehachse der Antriebswelle im Wesentlichen horizontal und die Schwenkachse des Schwenklagers im Wesentlichen vertikal verläuft.

Um die Kippbelastungen innerhalb des Drehlagers und die dadurch auftretenden Biegemomente gering zu halten, kann in Weiterbildung der Erfindung vorgesehen sein, dass die Antriebswelle und der Antriebsmotor auf entgegengesetzten Seiten des Lagerblocks angeordnet sind.

Weitere Einzelheiten und Merkmale der Erfindung sind aus der folgenden Beschreibung eines Ausführungsbeispiels unter Bezugnahme auf die Zeichnung ersichtlich. Es zeigen:
- Fig. 1: eine schematische ausschnittsweise perspektivische Darstellung einer erfindungsgemäßen Trennmaschine,
- Fig. 2: die Trennmaschine gemäß Fig. 1 mit herausgeschwenkter Antriebswelle und abgenommener Trennscheiben-Vorrichtung und
- Fig. 3: eine schematische Explosionsdarstellung der Bauteile der Trennscheiben-Vorrichtung.

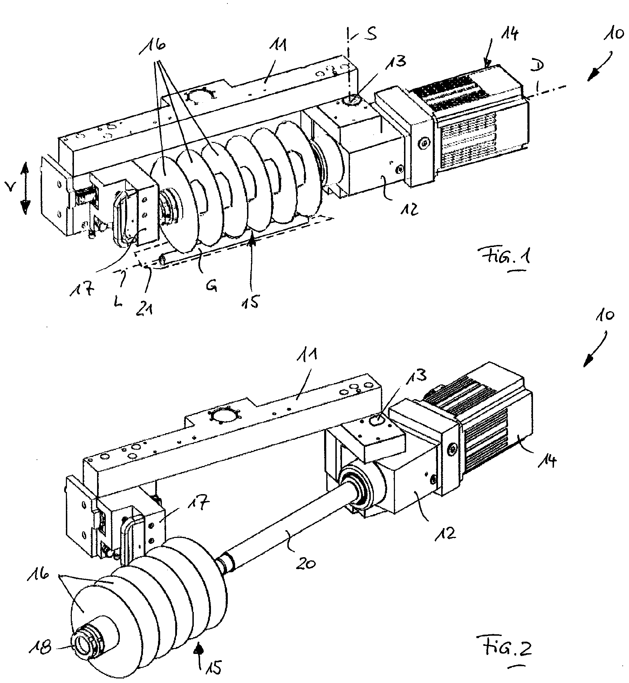

Figur 1 zeigt eine schematische, ausschnittsweise perspektivische Darstellung einer Trennmaschine 10. Die Trennmaschine 10 besitzt ein nur angedeutetes Maschinengestell 11, das entweder vertikal verstellbar und/oder schwenkbar gelagert ist, wie es symbolisch durch den Doppelpfeil V angedeutet sein soll.

Über ein Schwenklager 13 mit einer vertikalen Schwenkachse S ist ein Lagerblock 12 an dem Maschinengestell 11 schwenkbar gelagert. Der Lagerblock 12 trägt auf seiner gemäß Fig. 1 rechten Seite einen Antriebsmotor 14 und auf seiner entgegengesetzten, gemäß Fig. 1 linken Seite eine Antriebswelle 20 (siehe Fig. 2), die mittels des Antriebsmotors 14 drehangetrieben ist.

Auf der Antriebswelle 20 sitzt eine Trennscheiben-Vorrichtung 15, die als Einheit auf die Antriebswelle 20 axial aufgeschoben bzw. von dieser abgezogen werden kann.

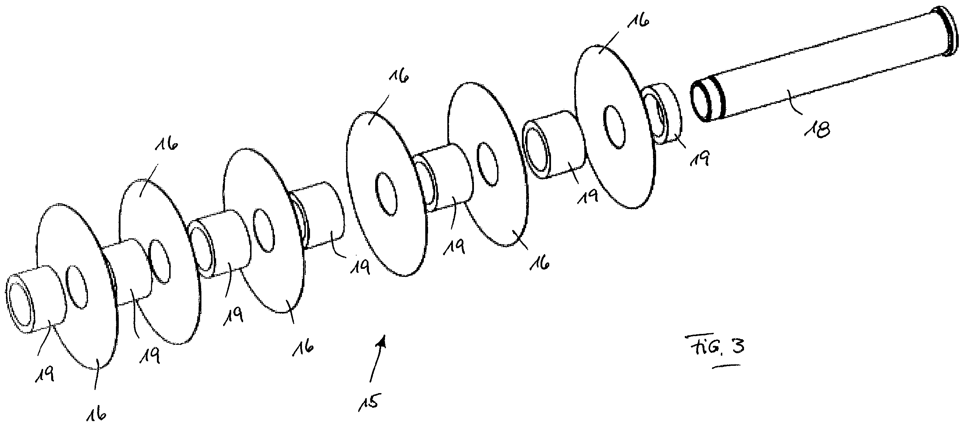

Wie Sie Fig. 3 zeigt, umfasst die Trennscheiben-Vorrichtung 15 eine Lagerhülse 18, die unter enger Passung axial auf die Antriebswelle 20 aufgeschoben und auf dieser drehfest fixiert werden kann. Auf die Lagerwelle 18 sind hülsenförmige Distanzstücke 19 und Trennscheiben 16 alternierend aufsetzbar. Die Distanzstücke 19 definieren den gegenseitigen Abstand benachbarter Trennscheiben 16. Ein endseitiges Distanzstück 19 definiert jeweils den Abstand der ersten Trennscheiben 16 zum Ende der Lagerhülse 18. Die Distanzstücke 19 und die Trennscheiben 18 werden in alternierender Folge auf die Lagerhülse 18 in axialer Richtung unter enger Passung aufgeschoben und in geeigneter Weise, beispielsweise mittels einer formschlüssigen Verbindung und/oder einer kraftschlüssigen Verbindung drehfest mit der Lagerhülse 18 verbunden. Die so gebildete Trennscheiben-Vorrichtung 15 kann dann in axialer Richtung mit der Lagerhülse 18 auf die Antriebswelle 20 aufgeschoben und dort drehfest fixiert werden, wobei sich der Lagerblock 12 mit dem Antriebsmotor 14 und der Antriebswelle 20 in der herausgeschwenkten Position gemäß Fig. 2 befindet.

Anschließend wird der Lagerblock 12 mit dem Antriebsmotor 14, der Antriebswelle 20 und der aufgeschobenen und fixierten Trennscheiben-Vorrichtung 15 um das Schwenklager 13 wieder in die Trennmaschine 10 so zurückgeschwenkt, dass die Antriebswelle 20 an ihrem äußeren, dem Lagerblock 12 und dem Antriebsmotor 14 abgewandten Ende in einem Gegenlager 17 drehbar gelagert ist. Das Gegenlager 17 ist vorzugsweise zumindest in axialer Richtung der Antriebswelle 20 verschieblich an dem Maschinengestell 11 gelagert und in verschiedenen Positionen an dem Maschinengestell 11 festlegbar und insbesondere festspannbar.

In der Trennmaschine 10 ist eine Führung 21 für ein stab- oder trägerförmiges Grundmaterial G vorgesehen, bei dem es sich insbesondere um einen Hartmetallstab handeln kann. Wie Fig. 1 zeigt, verlaufen eine Drehachse D der Antriebswelle 20 und eine Längsrichtung L des Hartmetallstabs parallel zueinander. Durch Verstellen des Maschinengestells 11 kommen gleichzeitig alle Trennscheiben 16 mit dem Hartmetallstab in Anlage und durchtrennen diesen. Somit können in einem Arbeitsschritt eine Vielzahl von Abschnitten vorbestimmter Länge von dem Hartmetallstab abgeschnitten werden.

Um von dem Hartmetallstab Abschnitte geänderter Länge abzuschneiden, wird der Lagerblock 12 mit den daran angebrachten Bauteilen in die in Fig. 2 dargestellte Wechselposition geschwenkt und die Trennscheiben-Vorrichtung 15 wird von der Antriebswelle 20 als Einheit abgezogen und durch eine anderen, bereits vorbereitete Trennscheiben-Vorrichtung 15 ersetzt. Der Formatwechsel kann somit sehr schnell und in einfacher Weise vollzogen werden.

## Patentansprüche

1. Trennmaschine (10) zum Abtrennen von Abschnitten vorbestimmter Länge von einem stab- oder trägerförmigen metallenen Grundmaterial (G), mit einer Trennscheiben-Vorrichtung (15) mit zumindest einer drehangetriebenen Trennscheibe (16), wobei die Trennscheiben-Vorrichtung (15) so verstellbar ist, dass das Grundmaterial (G) mittels der Trennscheibe (16) durchtrennbar ist, **dadurch gekennzeichnet, dass** die Trennscheiben-Vorrichtung (15) mehrere auf Abstand parallel nebeneinander angeordnete Trennscheiben (16) umfasst.

2. Trennmaschine nach Anspruch 1, **dadurch gekennzeichnet, dass** die Trennscheiben (16) von einer gemeinsamen Antriebswelle (20) angetrieben sind.

3. Trennmaschine nach Anspruch 2, **dadurch gekennzeichnet, dass** die Trennscheiben (16) auswechselbar auf einer Lagerhülse (18) angebracht sind und dass die Lagerhülse (18) auf die Antriebswelle (20) aufsetzbar und mit dieser drehfest verbindbar ist.

4. Trennmaschine nach einem der Ansprüche 1 bis 3, **dadurch gekennzeichnet, dass** zwischen benachbarten Trennscheiben (16) jeweils ein Distanzstück (19) angeordnet ist.

5. Trennmaschine nach Anspruch 4, **dadurch gekennzeichnet, dass** die Distanzstücke (19) auswechselbar auf der Lagerhülse (18) angeordnet sind.

6. Trennmaschine nach Anspruch 4 oder 5, **dadurch gekennzeichnet, dass** die Trennscheiben-Vorrichtung (15) mit den Trennscheiben (16), den Distanzstücken (19) und der Lagerhülse (18) als Baueinheit von der Antriebswelle (20) abnehmbar und auf diese aufsetzbar ist.

7. Trennmaschine nach einem der Ansprüche 2 bis 6, **dadurch gekennzeichnet, dass** ein Antriebsmotor (14) und die Antriebswelle (20) an einem Lagerblock (12) gehalten und zusammen mit diesem um ein Schwenklager (13) schwenkbar an einem Maschinengestell (11) gelagert sind.

8. Trennmaschine nach Anspruch 7, **dadurch gekennzeichnet**, das eine Schwenkachse (S) des Schwenklagers (13) senkrecht zu einer Drehachse (D) der Antriebswelle (20) verläuft.

9. Trennmaschine nach Anspruch 7 oder 8, **dadurch gekennzeichnet, dass** die Antriebswelle (20) und der Antriebsmotor (14) auf entgegensetzten Seiten des Lagerblocks (12) angeordnet sind.
